# EUROPEAN PATENT SPECIFICATION

(11) **EP 3 001 073 B1**
(45) Date of publication and mention of the grant of the patent: **24.05.2017**
(21) Application number: 15186416.2
(22) Date of filing: 23.09.2015
(51) Int. Cl.: G05G 1/04, G05G 5/04, F16H 59/02

(54) **SELF-PROPELLED WORKING MACHINE**
SELBSTANGETRIEBENE ARBEITSMASCHINE
MACHINE DE TRAVAIL AUTOMOTRICE

(30) Priority: 26.09.2014 JP 2014197421
(43) Date of publication of application: 30.03.2016
(73) Proprietor: HONDA MOTOR CO., LTD., Tokyo, 107-8556 (JP)
(72) Inventor: YAMAZAKI, Nobuo, Saitama, 351-0193 (JP); YOSHIGASAKI, Tsuyoshi, Saitama, 351-0193 (JP)
(74) Representative: Herzog, Markus

(56) References cited:
- US-A- 4 548 094
- US-A1- 2013 239 731

## Description

The present invention relates to an improvement in self-propelled working machine capable of adjusting forward and rearward traveling speeds of travel devices in response to a single speed traveling lever being pivotally operated, as known from US 2013/0239731, disclosing all the features of the preamble of claim 1. Among the conventionally-known types of self-propelled working machines is one in which travel devices are operated to travel forward and rearward by means of a single speed adjusting lever. The single speed adjusting lever is pivotally operable in opposite directions from a neutral position, so that the single speed adjusting lever adjusts a forward traveling speed of the travel devices by being pivotally operated in one of the opposite directions and adjusts a rearward traveling speed of the travel devices by being pivotally operated in the other direction.

In many cases, self-propelled working machines of the aforementioned type, which work while traveling, can achieve a higher working efficiency as the traveling speed increases. Examples of such self-propelled working machines include a snow removal machine including a snow removing member (or snow blade) provided on a front section of a machine body. Snow can be pushed out by the snow removing member as the snow removal machine is caused to travel forward. Thus, causing the snow removal member to travel forward at a higher speed can finish snow removal work by the snow removing member more quickly.

To skilled human operators well experienced in operating a snow removal machine, it is preferable that a pivotal operating range of the speed adjusting lever be wide, i.e. maximum traveling speed of the travel devices be high, in order to enhance the working efficiency. To aged persons and beginner human operators not used to operating a snow removal machine, on the other hand, it is preferable that the pivotal operating range of the speed adjusting lever be narrow. Thus, in many cases, the pivotal operating range of the speed adjusting lever is set at a medium so that the maximum traveling speed of the travel device can be set at a medium. However, such a medium pivotal operating range setting is not satisfactory to either skilled human operators or beginner human operators and thus has to be improved in order to satisfy both skilled human operators and beginner human operators.

In such circumstances, a technique for controlling the pivotal operating range of the speed adjusting lever by means of a control plate has been under development. Such a technique is known, for example, from Japanese Patent Application Laid-open Publication No. HEI-9-024744 (hereinafter referred to as "Patent Literature 1").

The technique known from Patent Literature 1 is implemented as a self-propelled working machine, which is capable of traveling forward and rearward at a high speed and yet capable of preventing a spin turn during high-speed travel, and which includes left and right forward/rearward travel levers (i.e., left and right speed adjusting levers) and left and right crawlers (i.e., left and right travel devices). The left and right forward/rearward travel levers, extending upward from a machine body, are mounted to the machine body for pivotal movement in forward and rearward directions.

The left and right forward/rearward travel levers can individually manipulate traveling directions and speeds of corresponding ones of the left and right crawlers. In response to a human operator pivotally operating the left forward/rearward travel lever in the forward direction, for example, the left crawler travels forward at a speed corresponding to a pivotally operated amount of the left forward/rearward travel lever. Further, in response to the human operator pivotally operating the left forward/rearward travel lever in the rearward direction, the left crawler travels rearward at a speed corresponding to a pivotally operated amount of the left forward/rearward travel lever. Operational relationship between the right forward/rearward travel lever and the right crawler is similar to the aforementioned operational relationship between the left forward/rearward travel lever and the left crawler.

The pivotal operating ranges (i.e., pivotable ranges) of the left and right forward/rearward travel levers are controllable via the single control plate having plate surfaces oriented vertically or in upward and downward directions. More specifically, the control plate is slidable in the forward and rearward directions and has left and right holes formed vertically through the thickness of the control plate and elongated in the forward-rearward direction. The left and right forward/rearward travel levers are inserted through the left and right elongated holes, respectively, so that the respective pivotal operating ranges (pivotable ranges), in the opposite forward and rearward directions, of the left and right forward/rearward travel levers are controllable by the single control plate.

If the left and right forward/rearward travel levers are pivotally operated to their forward maximum operated amount, for example, the control plate is located at its foremost position. If only the right forward/rearward travel lever is pivotally operated in the rearward direction in this state, such rearward pivotal operation of the right forward/rearward travel lever is limited because the right forward/rearward travel lever contacts the rear end edge of the right elongated hole. As a consequence, a spin turn during high-speed travel can be prevented.

However, the technique known from Patent Literature 1 is designed to merely control the respective pivotable ranges, in the opposite forward and rearward directions, of the two, i.e. left and right, forward/rearward travel levers. Such a technique cannot be applied as-is to the construction where rearward and forward travel of the travel device is controlled by means of a single speed adjusting lever.

In view of the foregoing prior art problems, it is an object of the present invention to provide an improved technique which is applicable to a self-propelled working machine including a single speed adjusting lever and which is not only capable of setting control ranges of both a forward traveling speed and a rearward traveling speed of a travel unit but also capable of setting the control range of only any one of the forward and rearward traveling speeds.

In order to accomplish the above-mentioned object, the present invention provides an improved self-propelled working machine which includes a travel unit and a single speed adjusting lever pivotally operable in opposite directions from a neutral position, the speed adjusting lever adjusting a forward traveling speed of the travel unit by being pivotally operated in one of the opposite directions and adjusting a rearward traveling speed of the travel unit by being pivotally operated in the other of the opposite directions, and which is characterized by comprising: a control plate constructed to control pivotable ranges, in the opposite directions, of the speed adjusting lever; and a mounting section having the control plate mounted thereto by means of a pair of fastener members. At least one of the control plate and the mounting section has a pair of elongated holes having corresponding ones of the fastener members passed therethrough, each of the elongated holes is elongated in a direction perpendicular to pivotable directions of the speed adjusting lever as the speed adjusting lever positioned in the neutral position is viewed in a direction from a distal end of the lever, and the control plate is displaceable relative to the mounting section within a relative displaceable range between the pair of elongated holes and the pair of faster members.

In the self-propelled working machine of the present invention, at least one of the control plate, constructed to control the pivotable ranges of the speed adjusting lever, and the mounting section has the pair of elongated holes through which are passed the corresponding fastener members, and each of the elongated holes is formed elongated in the direction perpendicular to the pivotable directions of the speed adjusting lever as the speed adjusting lever positioned in the neutral position is viewed in the direction from the lever's distal end. The "direction perpendicular to the pivotable directions" only need to be substantially (basically) perpendicular to the pivotable directions and need not intersect the pivotable directions. The control plate is displaceable relative to the mounting section within the relative displaceable range between the pair of elongated holes and the pair of faster members.

Thus, by displacing the control plate in a longitudinal direction of the pair of elongated holes, it is possible to adjust the pivotable ranges, in the opposite directions, of the speed adjusting lever. As a result, it is possible to adjust control ranges of both of the forward traveling speed and the rearward traveling speed of the travel unit. Further, by rotationally (pivotally) displacing the control plate about a given point of one of the elongated holes (i.e., with the given point of one of the elongated holes functioning as a pivot point), it is possible to adjust the pivotable range, in any one of the opposite directions, of the speed adjusting lever. As a result, it is possible to adjust the control range of any one of the forward traveling speed and the rearward traveling speed of the travel unit.

By displacing the control plate as above, it is possible to adjust the respective control ranges of both the forward traveling speed and the rearward traveling speed of the travel unit as desired and with ease, but also adjust the control range of any one of the forward traveling speed and the rearward traveling speed of the travel unit as desired and with ease. Besides, it just suffices to provide a simple construction which only requires each of the pair of elongated holes to be formed in a shape elongated in the direction perpendicular to the linear pivotable directions of the speed adjusting lever as the speed adjusting lever positioned in the neutral position is viewed in the direction from the distal end of the lever.

Preferably, in the self-propelled working machine of the present invention, the control plate has an opening section formed in a portion thereof located on a pivoting trajectory of the speed adjusting lever, and portions of the edge of the opening section form a pair of limiting surfaces for limiting the pivotable ranges of the speed adjusting lever, the pair of limiting surfaces slanting relative to the longitudinal direction of the pair of elongated holes. Thus, it is possible to control the pivotable ranges of the speed adjusting lever with a simple construction. Further, because the limiting surfaces slant relative to the longitudinal direction of the pair of elongated holes. In this manner, it is possible to adjust the pivotable ranges of the speed adjusting lever more finely and more easily than in a case where the limiting surfaces do not slant relative to the longitudinal direction of the pair of elongated holes.

Preferably, the self-propelled working machine of the present invention further comprises: an operating lever capable of being held by a human operator's hand together with a grip of the operating handle; an operating-lever operated amount detection section for detecting an operated amount of the operating lever; a speed-adjusting-lever operated amount detection section for detecting a pivotally operated amount of the speed adjusting lever; and a control section constructed to determine a reference traveling speed on the basis of both of detection values output from the operating-lever operated amount detection section and the speed-adjusting-lever operated amount detection section and controls the traveling speed of the travel unit to match or conform to the reference traveling speed. Because the control section controls the traveling speed of the travel unit to conform to the reference traveling speed, it is possible to set the reference traveling speed more finely than in a case where the reference traveling speed is adjusted on the basis of only the operated amount of the speed adjusting lever. As a result, operability of the self-propelled working machine of the present invention can be significantly enhanced.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a side view of a self-propelled working machine according to an embodiment of the present invention;
Fig. 2 is a perspective view of an operating lever and a speed adjusting lever mounted on operating handles in the working machine shown in Fig. 1;
Fig. 3 is a perspective view showing the operating lever and an operating-lever operated amount detection section of Fig. 2;
Fig. 4 is a sectional view taken along line 4 - 4 of Fig. 2;
Fig. 5 is a side elevational view of the speed adjusting lever and a speed-adjusting-lever operated amount detection section as viewed from an outside in a width direction of the self-propelled working machine;
Fig. 6 is a diagram explanatory of operation of the speed adjusting lever and the speed-adjusting-lever operated amount detection section in a state where a control plate shown in Fig. 5 has been displaced to an uppermost limit position;
Fig. 7 is a diagram explanatory of operation of the speed adjusting lever and the speed-adjusting-lever operated amount detection section in a state where the control plate shown in Fig. 6 has been displaced to a lowermost limit position; and
Fig. 8 is a diagram explanatory of operation of the speed adjusting lever and the speed-adjusting-lever operated amount detection section in a state where the control plate shown in Fig. 7 has been rotationally displaced about a given point of one of elongated holes (i.e., with the given point of one of elongated holes functioning as a pivot point).

Now, a description will be given about an embodiment of a self-propelled working machine of the present invention, assuming that the self-propelled working machine is constructed as a snow removal machine. In the following description, the terms "forward", "rearward", "left", "right", "upper", "lower", etc. are used to refer to directions as viewed from a human operator operating or manipulating the snow removal machine.

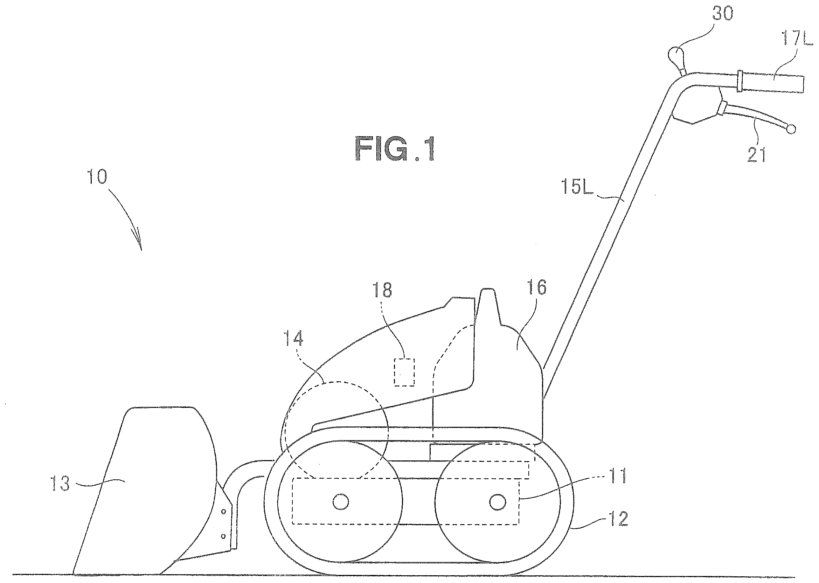

As shown in Fig. 1 the snow removal machine 10 is a self-propelled working machine that travels by means of left and right travel devices (collectively referred to as "traveling unit") 12. The snow removal machine 10 will hereinafter sometimes be referred to as "self-propelled working machine 10" as appropriate.

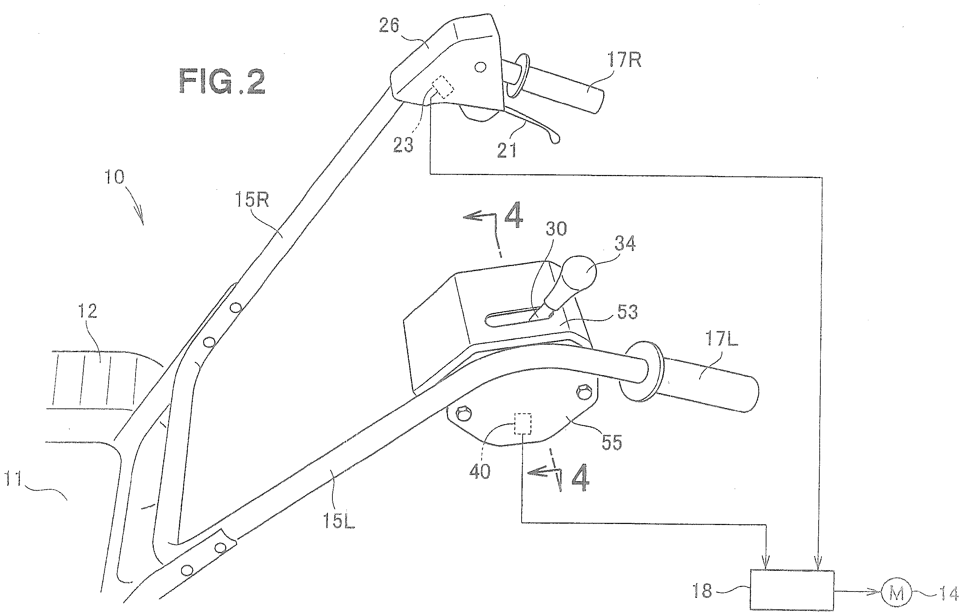

More specifically, the self-propelled working machine 10 includes: a machine body frame 11; the left and right travel devices 12 provided on the left and right sides of the machine body frame 11; a snow disposal member (i.e., snow blade) 13 mounted on a front portion of the machine body frame 11; a drive source 14 mounted on a middle portion of the machine body frame 11; and left and right operating handles 15L and 15R (see also Fig. 2) mounted on a rear portion of the machine body frame 11.

The left and right travel devices 12 are each in the form of a crawler. The snow disposal member (snow blade) 13 can push out snow as the snow removal machine 10 is caused to travel forward. The drive source 14, which is for example in the form of an electric motor, drives the left and right travel devices 12. The drive source 14 is supplied with electric power output from a battery 16. As shown in Fig. 2, the left and right operating handles 15L and 15R extend obliquely upward and rearward from the rear portion of the machine body frame 11 and have left and right grips 17L and 17R on their respective distal end portions. The human operator can operate the left and right operating handles 15L and 15R while waking together with the snow removal machine 10 with the left and right grips 17L and 17R held by his or her both hands. Further, a control section 18 for controlling the driving operation of the motor 14 is mounted on the machine body frame 11.

As shown in Fig. 2, one of the left and right operating handles 15L and 15R (operating handle 15R in the illustrated example) has an operating lever 21 mounted near its grip (grip 17R). Further, the other of the left and right operating handles 15L and 15R (operating handle 15L in the illustrated example) has a speed adjusting lever 30 mounted near its grip (grip 17L). The following description will be given in relation to the case where the operating lever 21 is mounted near the grip 17R of the right operating handle 15R while the speed adjusting lever 30 is mounted near the grip 17L of the left operating handle 15L as illustrated in Fig. 2.

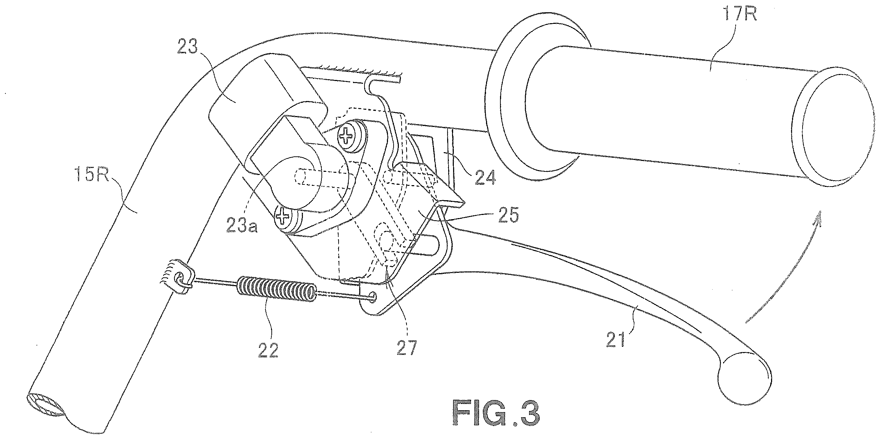

Further, as shown in Fig. 3, the operating lever 21 is a pivotal operation member that is disposed along the grip 17R of the right operating handle 15R and can be held by a human operator's hand together with the grip 17R. The operating lever 21 is normally held in a freed position away from the grip 17R by biasing force of a return spring 22, and it is pivotable toward the grip 17R by being held by the human operator together with the operating handle 15R. A pivoted amount, i.e. a pivotally operated amount, of the operating lever 21 is detected by an operating-lever operated amount detection section 23. The operating-lever operated amount detection section 23, which is for example in the form of a rotary potentiometer, is mounted on the right operating handle 15R and disposed near a pivot base section of the operating lever 21.

More specifically, the right operating handle 15R includes a lever bracket 24 in the form of a vertical plate, and a detecting bracket 25 in the form of a vertical plate parallel to the lever bracket 24. The pivot base section of the operating lever 21 is pivotably mounted on the lever bracket 24. The operating lever 21 and the operating-lever operated amount detection section 23 are covered with a cover 26 (Fig. 2).

The operating lever 21 is connected to a detection shaft (rotation shaft) 23a of the operating-lever operated amount detection section 23 via a link mechanism 27. Thus, the detection shaft 23a rotates by an amount corresponding to a pivotally operated amount of the operating lever 21, by which the operating-lever operated amount detection section 23 can detect the pivotally operated amount of the lever 21.

The operating lever 21 is a so-called deadman lever or travel preparation lever. Once the human operator releases his or her hand from the operating lever 21, the pivotally operated amount detected by the operating-lever operated amount detection section 23 becomes zero, so that the detection section 23 outputs a zero detection signal to the control section 18 (see Fig. 2). Upon receipt of the zero detection signal from the operating-lever operated amount detection section 23, the control section 18 deactivates the electric motor 14.

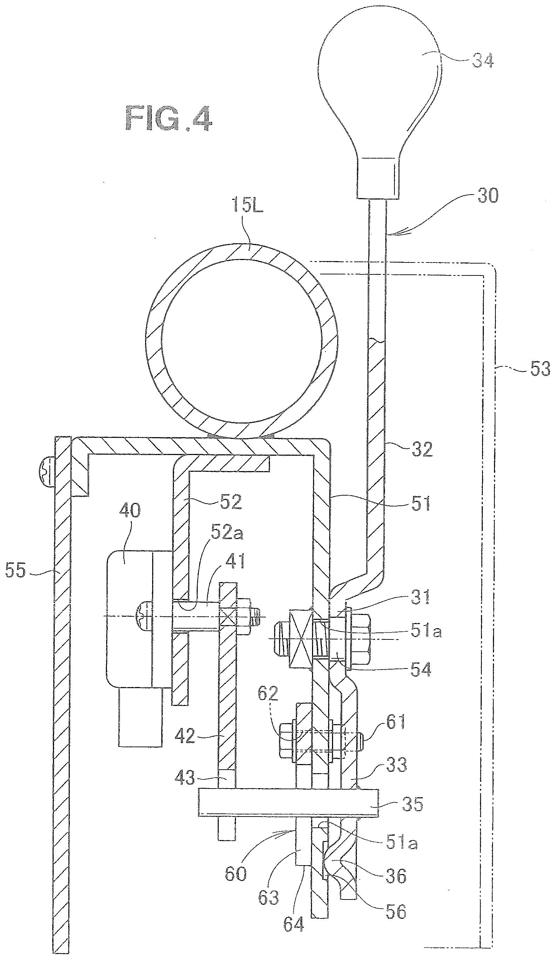

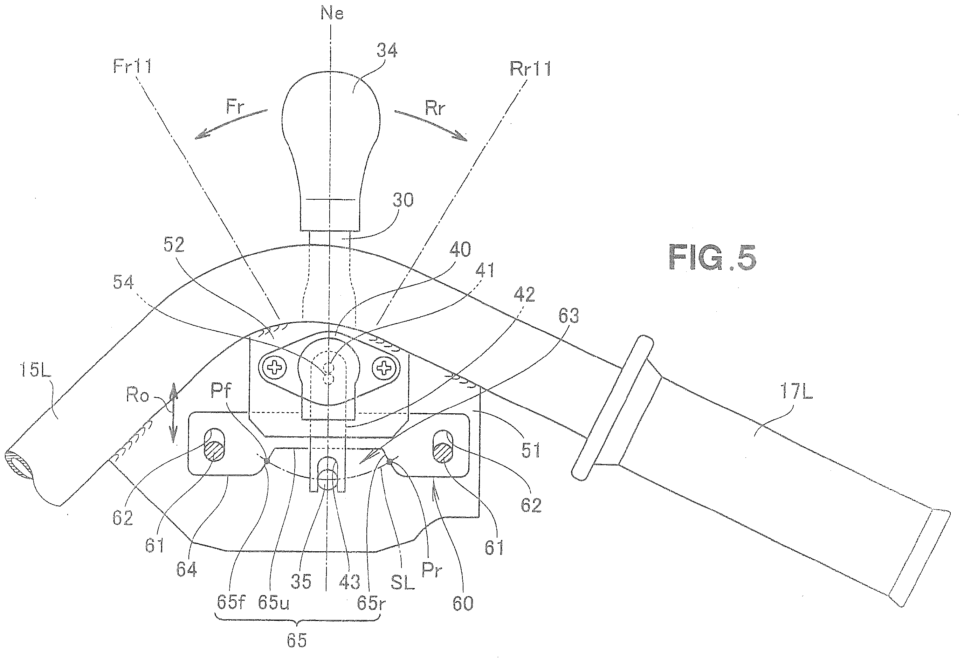

As shown in Figs. 4 and 5, the single speed adjusting lever 30 is pivotally operable in opposite (i.e., forward and rearward) directions Fr and Rr from a neutral position Ne. The single speed adjusting lever 30 adjusts a forward traveling speed of the travel devices 12 (see Fig. 1) by being pivotally operated in one of the opposite directions (forward direction Fr) and adjusts a rearward traveling speed of the travel devices 12 by being pivotally operated in the other of the opposite directions (rearward direction Rr).

Needless to say, as the speed adjusting lever 30 positioned in the neutral position Ne is viewed in a direction from the distal end of the lever 30 (i.e., from the grip 34), a pivoting trajectory, in the forward and rearward pivotable directions Fr and Rr, of the speed adjusting lever 30 is substantially (basically) linear. A pivotally operated amount of the speed adjusting lever 30 is detected by a speed-adjusting-lever operated amount detection section 40 that is, for example, in the form of a rotary potentiometer.

In the following description, let it be assumed that the forward and rearward pivotable directions Fr and Rr of the speed adjusting lever 30 correspond to a front-rear (forward-rearward) direction of the self-propelled working machine 10. The left operating handle 15L includes a lever bracket 51 in the form of a vertical plate, and a detecting bracket 52 in the form of a vertical plate parallel to the lever bracket 51. The detecting bracket 52 is located outwardly, in a width direction of the self-propelled working machine 10, of the lever bracket 51.

The speed adjusting lever 30 is a member located inwardly, in the width direction of the self-propelled working machine 10, of the lever bracket 51, and the speed adjusting lever 30 is elongated in a vertical or up-down direction and covered with a cover 53. The speed adjusting lever 30 includes a pivot base section 31 located generally centrally in a longitudinal direction of the lever 30, an upper arm section 32 extending upward from the pivot base section 31, and a lower arm section 33 extending downward from the pivot base section 31.

The pivot base section 31 is mounted to the lever bracket 51 for pivoting movement about a pivot shaft 54 in the forward and rearward directions. A grip 34 is mounted on the upper or distal end of the upper arm section 32. An engaging pin 35 and a positioning protrusion 36 are provided on the lower arm section 33. The engaging pin 35 is in the form of a horizontal rod of a circular cross-sectional shape passed through a vertically elongated hole 51a of the lever bracket 51 to extend outwardly in the width direction of the self-propelled working machine 10.

The speed-adjusting-lever operated amount detection section 40 is mounted on the detecting bracket 52. The speed-adjusting-lever operated amount detection section 40 is located outwardly, in the width direction of the self-propelled working machine 10, of the detecting bracket 52, and the detection section 40 is covered with a cover 55 of a flat plate shape. The speed-adjusting-lever operated amount detection section 40 has a detection shaft (rotation shaft) 41 parallel to the pivot shaft 54. The detection shaft 41 extends from the speed-adjusting-lever operated amount detection section 40, through a hole 52a of the detecting bracket 52, inwardly toward the speed adjusting lever 30.

A pivot arm 42 is mounted at its proximal end portion on the detection shaft 41. The pivot arm 42 extends downward from the detection shaft 41 and is pivotable in the forward and rearward directions together with the detection shaft 41. A groove (or hole) 43 elongated in a longitudinal direction of the pivot arm 42 is formed in a distal end (lower end) portion of the arm 42. The engaging pin 35 of the speed adjusting lever 30 is held in engagement with the groove 43.

As the speed adjusting lever 30 is pivotally operated in any one of the forward and rearward directions FR and Rr, the engaging pin 35 turns the detection shaft 41 via the pivot arm 42. As a consequence, the speed-adjusting-lever operated amount detection section 40 can detect a pivoted direction and pivoted amount of the speed adjusting lever 30.

The neutral position Ne of the speed adjusting lever 30 is where the lever 30 stands vertically upward from the lever bracket 51. The lever bracket 51 has a positioning recess 56 in which is engageable the positioning protrusion 36 of the speed adjusting lever 30. When the speed adjusting lever 30 is in the neutral position Ne, the positioning protrusion 36 fits in the positioning recess 56, so that the speed adjusting lever 30 is held in the neutral position Ne.

If, after that, operating force strong enough to disengage the positioning protrusion 36 from the positioning recess 56 is applied to the speed adjusting lever 30, the engagement between the positioning protrusion 36 and the positioning recess 56 is removed, and then, the positioning protrusion 36 contacts a plate surface of the lever bracket 51 with a predetermined frictional force, so that the speed adjusting lever 30 can be held in a desired position.

In response to the human operator pivoting the speed adjusting lever 30 from the neutral position Ne in the forward direction (forward traveling direction) Fr, the control section 18 (see Fig. 1) can not only cause the self-propelled working machine 10 to travel forward on the basis of a detection value output from the speed-adjusting-lever operated amount detection section 40, but also perform speed control such that the self-propelled working machine 10 travels forward at a desired high speed in accordance with the forward pivoted amount of the speed adjusting lever 30. Similarly, in response to the human operator pivoting the speed adjusting lever 30 from the neutral position Ne in the rearward direction Rr, the control section 18 can not only cause the self-propelled working machine 10 to travel rearward on the basis of a detection value output from the speed-adjusting-lever operated amount detection section 40, but also perform speed control such that the self-propelled working machine 10 travels rearward at a desired high speed in accordance with the rearward pivoted amount of the speed adjusting lever 30. Because the speed adjusting lever 30 is operable to set any desired one of the forward and rearward travel directions and speed control to achieve high- or low-speed travel in the desired direction Fr or Rr, it will sometime be referred to also as "forward/rearward travel speed adjusting lever" or "direction/speed lever".

Pivotable ranges, in the opposite directions, of the speed adjusting lever 30 are controllable by the control plate 60 in the following manner. The control plate 60 is a member of a flat plate shape fixed to the lever bracket 51 by means of a pair of fasteners 61, such as bolts. Namely, the control plate 60 is superimposed over and detachably bolted to the outer surface of the lever bracket 51 (opposite from the speed adjusting lever 30). The lever bracket 51 will hereinafter be referred to also as "mounting section 51" because it is a type of mounting section capable of mounting thereto the control plate 60.

At least one of the control plate 60 and the mounting section 51 (e.g., the control plate 60 in the illustrated example) has a pair of elongated holes 62 formed horizontally through the thickness thereof for passage therethrough of the pair of fasteners 61. As the speed adjusting lever 30 positioned in the neutral position Ne is viewed in the direction from the distal end of the lever 30 (i.e., from the grip 34), the elongated holes 62 are each elongated in a direction Ro perpendicular to the pivotable directions Fr and Fr of the lever 30. Namely, as viewed in the direction from the distal end of the lever 30, the pivoting trajectory, in the pivotable directions Fr and Rr, of the speed adjusting lever 30 is substantially (basically) linear, as noted above. The holes 62 are each elongated in the direction Ro perpendicular to the linear pivotable directions Fr and Fr of the lever 30. The "direction Ro perpendicular to the linear pivotable directions Fr and Fr" only need to be substantially (basically) perpendicular to the linear pivotable directions Fr and Fr and need not intersect the linear pivotable directions Fr and Fr.

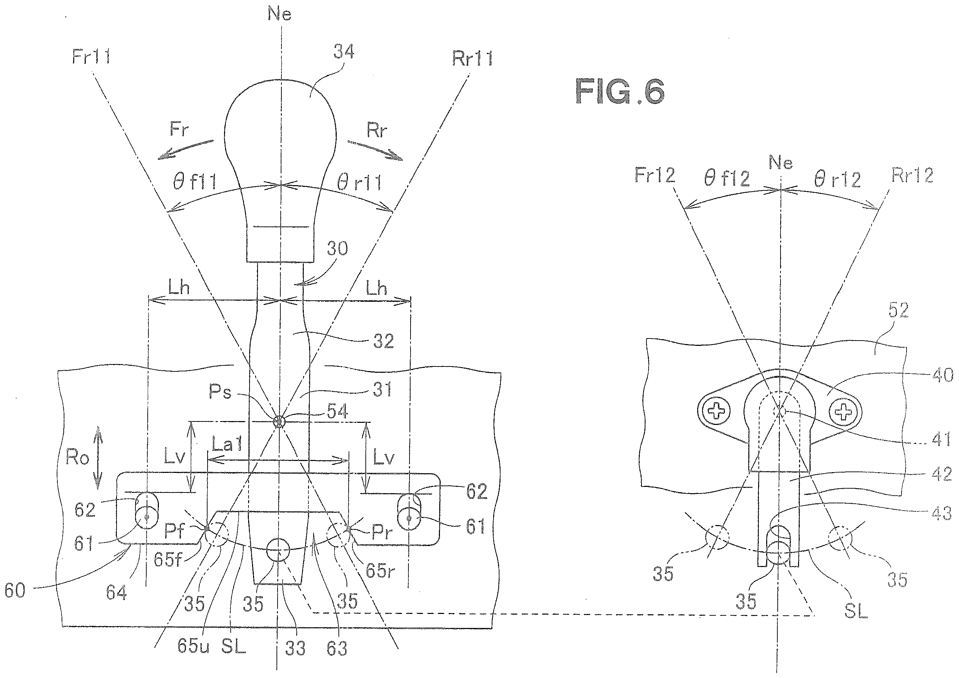

As the speed adjusting lever 30 positioned in the neutral position Ne is viewed in an axial direction of the pivot shaft 54, for example, relationship between the speed adjusting lever 30 and the pair of elongated holes 62 is as follows. The holes 62 are each formed elongated in a direction parallel to the speed adjusting lever 30. Besides, the elongated holes 62 are formed horizontally symmetrically to each other with respect to the speed adjusting lever 30 positioned in the neutral position Ne. Namely, as shown in Fig. 6, horizontal distances Lh between a central axis Ps of the pivot shaft 54 and the elongated holes 62 are identical to each other, and vertical distances Lv between the central axis Ps of the pivot shaft 54 and the elongated holes 62 are also identical to each other.

The elongated holes 62 are sized to allow the control plate 60 to be not only displaced in the longitudinal direction of the elongated holes 62 of the control plate 60 but also rotationally (pivotally) displaced about a given point of one of the elongated holes 62. A length of each of the elongated holes 62 defines a displaceable amount of the control plate 60.

Namely, the control plate 60 is displaceable relative to the mounting section 51 within a relative displaceable range between the pair of elongated holes 62 and the pair of fastener member 61. More specifically, the control plate 60 has an opening section 63 formed in a portion thereof located on a pivoting trajectory SL (in other words, swinging trajectory SL of the engaging pin 35). The opening section 63 includes a recess formed by recessing a portion of the control plate 60, a through-hole formed through the thickness of the plate 60, and another recess formed by hollowing a portion of the plate surface of the plate 60. For example, the opening section 63 is in the form of a downwardly-opening recess formed in the lower end surface 64 of the control plate 60 adjacent to the distal end of the lower arm section 33, and the opening section 63 is formed horizontally symmetrically with respect to the speed adjusting lever 30 positioned in the neutral position Ne.

Further, as shown in Fig. 5, the edge 65 of the opening section 63 comprises three edge portions: a front edge portion 65f located forward in the swinging direction (FR, Rr) of the engaging pin 35; a rear edge portion 65r located rearward in the swinging direction (FR, Rr) of the engaging pin 35; and an upper edge portion 65 interconnecting the front and rear edge portions 65f and 65f. Portions of the edge 65 of the opening section 63, i.e. the front and rear edge portions 65f and 65f, constitute a pair of limiting surfaces for limiting the pivotable ranges of the speed adjusting lever 30. Thus, the front and rear edge portions 65f and 65f will hereinafter be referred to also as "limiting surfaces 65f and 65r".

The limiting surfaces 65f and 65r slant relative to the longitudinal direction of the elongated holes 62. Namely, the front edge portion 65f slants from the front end of the upper edge portion 65 forwardly and downwardly, and the rear edge portion 65r slants from the rear end of the upper edge portion 65u rearwardly and downwardly. It is preferable that the two elongated holes 62 be located in horizontally opposite end portions of the control plate 60 with the opening section 63 disposed therebetween.

Next, a description will be given about behavior of the embodiment of the self-propelled working machine 10 constructed in the above-described manner.

Fig. 6 is a diagram showing the pair of elongated holes 62 set in position after having been slid relative to the pair of fastener members 61 along the longitudinal direction of the speed adjusting lever 30, positioned in the neutral position Ne, toward the grip 34, i.e. to an uppermost limit position. In this case, the swinging trajectory SL of the engaging pin 35 is located near the lower end of the opening section 63. An intersection point between the front limiting surface 65f and the swinging trajectory SL of the engaging pin 35 will hereinafter be referred to as "front intersection point Pf", while an intersection point between the rear limiting surface 65r and the swinging trajectory SL of the engaging pin 35 will hereinafter be referred to as "rear intersection point Pr".

In this case, a distance La1 between the front intersection point Pf and the rear intersection point Pr is relatively large. Thus, a maximum pivotable angle θ f11 of the speed adjusting lever 30 from the neutral position Ne to a maximum forward position Fr11 and a maximum pivotable angle θ r11 of the speed adjusting lever 30 from the neutral position Ne to a maximum rearward position Rr11 are not only identical to each other ( θ f11 = θ r11) but also relatively great. Consequently, a maximum pivotable angle θ f12 of the pivot arm 42 from the neutral position Ne to a maximum forward position Fr12 and a maximum pivotable angle θ r12 of the pivot arm 42 from the neutral position Ne to a maximum rearward position Rr12 are not only identical to each other ( θ f12 = θ r12) but also relatively great.

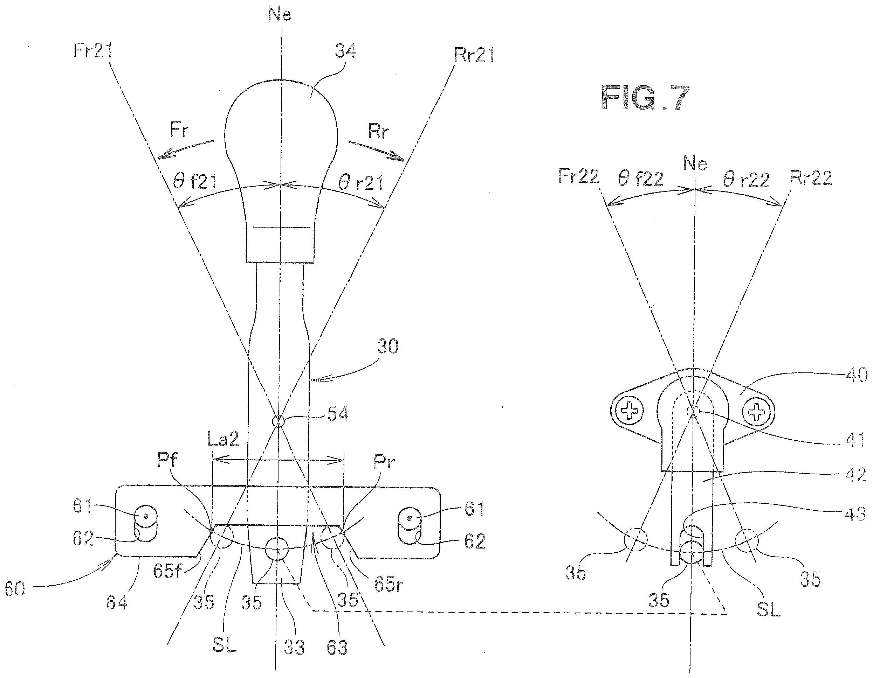

Fig. 7 is a diagram showing the pair of elongated holes 62 set in position after having been slid relative to the pair of fastener members 61 along the longitudinal direction of the speed adjusting lever 30, positioned in the neutral position Ne, toward the engaging pin 35, i.e. to a lowermost limit position. In this case, the swinging trajectory SL of the engaging pin 35 is located near the upper end of the opening section 63. Further, in this case, a distance La2 between the front and rear intersection points Pf and Pr is smaller than the distance La1 between the front and rear intersection points Pf and Pr shown in Fig. 6 (La2 > La1). Thus, a maximum pivotable angle θ f21 of the speed adjusting lever 30 from the neutral position Ne to a maximum forward position Fr21 and a maximum pivotable angle θ r21 of the speed adjusting lever 30 from the neutral position Ne to a maximum rearward position Rr21 are not only identical to each other ( θ f21 = θ r21) but also relatively small. Consequently, a maximum pivotable angle θ f22 of the pivot arm 42 from the neutral position Ne to a maximum forward position Fr22 and a maximum pivotable angle θ r22 of the pivot arm 42 from the neutral position Ne to a maximum rearward position Rr22 are not only identical to each other ( θ f22 = θ r22) but also relatively small.

Thus, the pivotable ranges, in the opposite directions from the neutral position Ne, of the speed adjusting lever 30 can be adjusted by the control plate 60 being displaced in the longitudinal direction of the pair of elongated holes 62. As a result, control ranges of both the forward traveling speed and the rearward traveling speed of the travel devices 12 can be adjusted.

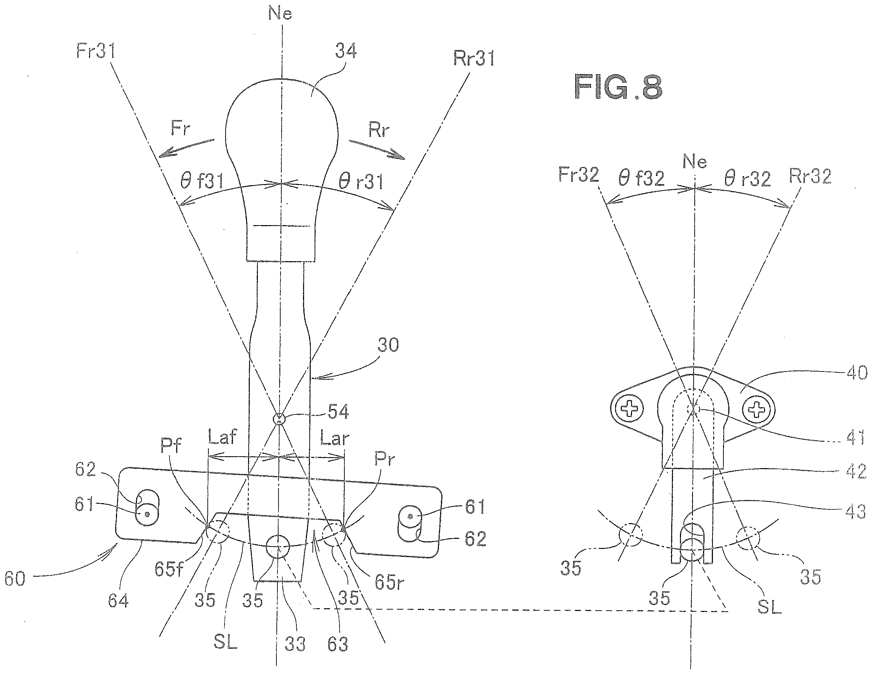

Fig. 8 shows the control plate 60 set in position after having been rotationally (pivotably) displaced about a given point of any one of the elongated holes 62 (i.e., with the given point of any one of the elongated holes 62 functioning as a pivot point). For example, only a front portion of the control plate 60 is slid upward from the position shown in Fig. 7. Namely, the front portion of the control plate 60 is rotationally displaced upward about the upper edge of the rear elongated hole 62 (i.e., with the upper edge of the rear elongated hole 62 functioning as a pivot point). Because of such pivotal displacement, a distance Laf from the speed adjusting lever 30 positioned in the neutral position Ne to the front intersection point Pf becomes greater than a distance Lar from the speed adjusting lever 30 to the rear intersection point Pr (Laf > Lar). Thus, a maximum pivotable angle θ f31 of the speed adjusting lever 30 from the neutral position Ne to a maximum forward position Fr31 is smaller than a maximum pivotable angle θ r31 of the speed adjusting lever 30 from the neutral position Ne to a maximum rearward position Rr31 ( θ f31 < θ r31). As a consequence, a maximum pivotable angle θ f32 of the pivot arm 42 from the neutral position Ne to a maximum forward position Fr32 is smaller than a maximum pivotable angle θ r32 of the pivot arm 42 from the neutral position Ne to a maximum rearward position Rr32 ( θ f32 < θ r32).

Thus, the pivotable range, in one of the opposite direction, of the speed adjusting lever 30 can be adjusted by the control plate 60 being rotationally displaced about a given point of any one of the elongated holes 62. In this manner, the control range of any one of the forward traveling speed and the rearward traveling speed of the travel devices 12 can be adjusted in the instant embodiment.

As apparent from the foregoing, by displacing the control plate 60 as above, it is possible to not only adjust the control ranges of both the forward traveling speed and the rearward traveling speed of the travel devices 12 as desired and with ease, but also adjust the control range of any one of the forward traveling speed and the rearward traveling speed of the travel devices 12 as desired and with ease. Besides, it just suffices to provide a simple construction which requires each of the pair of elongated holes 62 to be formed elongated in the direction Ro perpendicular to the pivotable directions Fr and Fr of the lever 30 positioned in the neutral position Ne (see Fig. 6) as the speed adjusting lever 30 positioned in the neutral position Ne is viewed in the direction from the distal end of the lever 30 (i.e., from the grip 34).

Further, in the instant embodiment, portions of the edge 65 of the opening section 63 form the pair of limiting surfaces 65f and 65r that controls the pivotable ranges of the speed adjusting lever 30. Thus, it is possible to control the pivotable ranges of the speed adjusting lever 30 with a simple construction. Further, the limiting surfaces 65f and 65r slant relative to the longitudinal direction of the pair of elongated holes 62. In this manner, it is possible to adjust the pivotable ranges of the speed adjusting lever 30 continuously and hence more finely and more easily than in a case where the limiting surfaces 65f and 65r do not slant relative to the longitudinal direction of the pair of elongated holes 62.

Furthermore, in the instant embodiment, as shown in Fig. 2, the control section 18 determines a reference traveling speed on the basis of both of detection values output from the operating-lever operated amount detection section 23 and the speed-adjusting-lever operated amount detection section 40 and controls the traveling speed of the travel devices 12 to conform to the reference traveling speed. Thus, with the instant embodiment, it is possible to set the reference traveling speed more finely than in a case where the reference traveling speed is adjusted on the basis of only the operated amount of the speed adjusting lever 30. As a result, operability of the self-propelled working machine 10 can be enhanced.

According to the present invention, the pair of elongated holes 62 only need be formed elongated in the direction Ro (see Fig. 6) perpendicular to the linear pivotable directions Fr and Rr of the speed adjusting lever 30 as the speed adjusting lever 30 positioned in the neutral position Ne is viewed in the direction from the distal end of the lever 30 (from the grip 34). As an example, the control plate 60 may be placed transversely so that its plate surfaces are oriented vertically or in upward and downward directions. In such a case, the pair of elongated holes 62 is formed elongated in the direction Ro perpendicular to the width direction of the self-propelled working machine, i.e. the pivotable directions Fr and Rr of the speed adjusting lever 30. Namely, the orientation of the pair of elongated holes 62 may be set such that the pivotable ranges, in the opposite directions Fr and Rr, of the speed adjusting lever 30 can be adjusted using the space of the opening section 63.

Further, the aforementioned engaging pin 35 may be disposed on the upper arm section 32 rather than on the lower arm section 33.

Furthermore, the aforementioned mounting section is not limited to the lever bracket 51 and may be any other section as long as the control plate 60 can be mounted on that section; for example, the mounting section may be the operating handle 15L.

Finally, it should be appreciated that the basic principles of the self-propelled working machine 10 of the present invention are well suited for application to snow removal machines including a snow disposal member or auger provided on a front portion of the machine body.
A self-propelled working machine (10), where a speed adjusting lever (30) adjusts a forward traveling speed of travel devices (15L, 15R) by being pivotally operated in one direction and a rearward traveling speed of the travel devices by being pivotally operated in the other direction, includes: a control plate (60) constructed to control pivotable ranges of the adjusting lever; and a mounting section (51) having the control plate mounted thereto by a pair of fastener members (61). At least one of the control plate and the mounting section has a pair of elongated holes (62) having corresponding ones of the fastener members passed therethrough. Each of the holes (62) is elongated in a direction perpendicular to pivotable directions of the adjusting lever as viewed from the lever's distal end. The control plate (60) is displaceable relative to the mounting section (51) within a relative displaceable range between the elongated holes and the faster members.

## Claims

1. A self-propelled working machine (10) including a travel unit (15L, 15R), and a single speed adjusting lever (30) pivotally operable in opposite directions (Fr, Rr) from a neutral position (Ne), the speed adjusting lever (30) adjusting a forward traveling speed of the travel unit by being pivotally operated in one of the opposite directions and adjusting a rearward traveling speed of the travel unit by being pivotally operated in other of the opposite directions,
**characterized in that** the self-propelled working machine (10) comprises: a control plate (60) constructed to control pivotable ranges, in the opposite directions (Fr, Rr), of the speed adjusting lever; and a mounting section (51) having the control plate mounted thereto by means of a pair of fastener members (61),
at least one of the control plate (60) and the mounting section (51) has a pair of elongated holes (62) having corresponding ones of the fastener members (61) passed therethrough,
each of the elongated holes (62) is elongated in a direction perpendicular to pivotable directions of the speed adjusting lever (30) as the speed adjusting lever (30) positioned in the neutral position (Ne) is viewed in a direction from a distal end of the lever (30), and
the control plate (60) is displaceable relative to the mounting section (51) within a relative displaceable range between the pair of elongated holes (62) and the pair of faster members (61).

2. The self-propelled working machine according to claim 1, wherein the control plate (60) has an opening section (63) formed in a portion thereof located on a pivoting trajectory (SL) of the speed adjusting lever, and
portions of an edge of the opening section (63) form a pair of limiting surfaces (65f, 65r) for limiting the pivotable ranges of the speed adjusting lever (30), the pair of limiting surfaces (65f, 65r) slanting relative to a longitudinal direction of the pair of elongated holes (62).

3. The self-propelled working machine according to claim 1 or 2, which further comprises:
an operating lever (21) capable of being held by a human operator's hand together with a grip of the operating handle (21);
an operating-lever operated amount detection section (23) for detecting an operated amount of the operating lever (21);
a speed-adjusting-lever operated amount detection section (40) for detecting a pivotally operated amount of the speed adjusting lever (30); and
a control section (18) constructed to determine a reference traveling speed on a basis of both of detection values output from the operating-lever operated amount detection section (23) and the speed-adjusting-lever operated amount detection section (40) and controls the traveling speed of the travel unit to conform to the reference traveling speed.

## Patentansprüche

1. Selbstangetriebene Arbeitsmaschine (10), die eine Fahreinheit (15L, 15R) und einen einzigen Geschwindigkeitseinstellhebel (30) enthält, der von einer Neutralposition (Ne) in entgegengesetzte Richtungen (Fr, Rr) schwenkend betätigbar ist, wobei der Geschwindigkeitseinstellhebel (30) eine Vorwärtsfahrgeschwindigkeit der Fahreinheit einstellt, indem er in einer der entgegengesetzten Richtungen schwenkend betätigt wird, und eine Rückwärtsfahrgeschwindigkeit der Fahreinheit einstellt, indem er in der anderen der entgegengesetzten Richtungen schwenkend betätigt wird,
**dadurch gekennzeichnet, dass** die selbstangetriebene Arbeitsmaschine (10) aufweist: eine Steuerplatte (60), die konstruiert ist, Schwenkbereiche des Geschwindigkeitseinstellhebels in die entgegengesetzten Richtungen (Fr, Rr) zu steuern; sowie einen Montageabschnitt (51), an dem die Steuerplatte mittels eines Paars von Befestigungselementen (61) montiert ist,
wobei die Steuerplatte (60) und/oder der Montageabschnitt (51) ein Paar von Langlöchern (62) aufweist, durch die entsprechende der Befestigungselemente (61) hindurchtreten,
wobei jedes der Langlöcher (62) in Richtung orthogonal zu den Schwenkrichtungen des Geschwindigkeitseinstellhebels (30) langgestreckt ist, wenn man den in der Neutralposition (Ne) positionierten Geschwindigkeitseinstellhebel (30) in Richtung von einem distalen Ende des Hebels (30) her betrachtet, und
die Steuerplatte (60) relativ zum Montageabschnitt (51) in einem relativen Verlagerungsbereich zwischen dem Paar von Langlöchern (62) und dem Paar von Befestigungselementen (61) verlagerbar ist.

2. Die selbstangetriebene Arbeitsmaschine nach Anspruch 1, wobei die Steuerplatte (60) einen Öffnungsabschnitt (63) aufweist, der in einem Teil davon ausgebildet ist, das auf einem Schwenkweg (SL) des Geschwindigkeitseinstellhebels angeordnet ist, und
Abschnitte eines Rands des Öffnungsabschnitts (63) ein Paar von Begrenzungsflächen (65f, 65r) zum Begrenzen der Schwenkbereiche des Geschwindigkeitseinstellhebels (30) bilden, wobei das Paar von Begrenzungsflächen (65f, 65r) relativ zur Längsrichtung des Paars von Langlöchern (62) abgeschrägt ist.

3. Die selbstangetriebene Arbeitsmaschine nach Anspruch 1 oder 2, die ferner aufweist:
einen Bedienungshebel (21), der dazu ausgelegt ist, zusammen mit einem Griff des Bedienungshebels (21) von der Hand einer Bedienungsperson gehalten zu werden;
einen Bedienungshebel-Bedienungsbetrag-Erfassungsabschnitt (23) zum Erfassen eines Bedienungsbetrags des Bedienungshelebs (21);
einen Geschwindigkeitseinstellhebel-Bedienungsbetrag-Erfassungsabschnitt (40) zum Erfassen eines Schwenkbedienungsbetrags des Geschwindigkeitseinstellhebels (30); und
einen Steuerabschnitt (18), der konstruiert ist, um auf der Basis von beiden Erfassungswerten, die von dem Bedienungshebel-Bedienungsbetrag-Erfassungsabschnitt (23) und dem Geschwindigkeitseinstellhebel-Bedienungsbetrag-Erfassungsabschnitt (40) ausgegeben werden, eine Referenzfahrgeschwindkeit zu bestimmen, und die Fahrgeschwindigkeit der Fahreinheit so steuert, dass sie mit der Referenzfahrgeschwindigkeit übereinstimmt.

## Revendications

1. Machine de travail autopropulsée (10) comprenant une unité de déplacement (15L, 15R) et un levier d'ajustement de vitesse unique (30) pouvant fonctionner de manière pivotante dans des directions opposées (Fr, Rr) à partir d'une position neutre (Ne), le levier d'ajustement de vitesse (30) ajustant une vitesse de déplacement vers l'avant de l'unité de déplacement en étant actionné de manière pivotante dans l'une des directions opposées et ajustant une vitesse de déplacement vers l'arrière de l'unité de déplacement en étant actionné de manière pivotante dans l'autre des directions opposées,
**caractérisée en ce que** la machine de travail autopropulsée (10) comprend : une plaque de commande (60) construite pour commander des plages pivotantes, dans des directions opposées (Fr, Rr) du levier d'ajustement de vitesse ; et une section de montage (51) ayant une plaque de commande montée sur cette dernière au moyen d'une paire d'éléments de fixation (61),
au moins l'une parmi la plaque de commande (60) et la section de montage (51) a une paire de trous allongés (62) ayant des éléments correspondant des éléments de fixation (61) passés à travers ces derniers,
chacun des trous allongés (62) est allongé dans une direction perpendiculaire aux directions pivotantes du levier d'ajustement de vitesse (30) lorsque le levier d'ajustement de vitesse (30) positionné dans la position neutre (Ne) est observé dans une direction à partir d'une extrémité distale du levier (30), et
la plaque de commande (60) est déplaçable par rapport à la section de montage (51) à l'intérieur de la plage déplaçable relative entre la paire de trous (62) allongés et la paire d'éléments de fixation (61).

2. Machine de travail autopropulsée selon la revendication 1, dans laquelle la plaque de commande (60) a une section d'ouverture (63) formée dans sa partie positionnée dans une trajectoire pivotante (SL) du levier d'ajustement de vitesse, et
des parties d'un bord de la section d'ouverture (63) forment une paire de surfaces de limite (65f, 65r) pour limiter les plages pivotantes du levier d'ajustement de vitesse (30), la paire de surfaces de vitesse (65f, 65r) s'inclinant par rapport à une direction longitudinale de la paire de trous allongés (62).

3. Machine de travail autopropulsée selon la revendication 1 ou 2, qui comprend en outre :
un levier d'actionnement (21) pouvant être maintenu par la main d'un opérateur humain conjointement avec une poignée de la poignée d'actionnement (21) ;
une section de détection de quantité actionnée de levier d'actionnement (23) pour détecter une quantité actionnée du levier d'actionnement (21) ;
une section de détection de quantité actionnée de levier d'ajustement de vitesse (40) pour détecter une quantité actionnée de manière pivotante du levier d'ajustement de vitesse (30) ; et
une section de commande (18) fabriquée pour déterminer une vitesse de déplacement de référence à la fois en fonction de valeurs de détection produites par la section de détection de quantité actionnée de levier d'actionnement (23) et la section de détection de quantité actionnée de levier d'ajustement de vitesse (40) et commande la vitesse de déplacement de l'unité de déplacement afin de se conformer à la vitesse de déplacement de référence.
